# EUROPÄISCHE PATENTSCHRIFT

(11) **EP 1 098 732 B1**
(45) Veröffentlichungstag und Bekanntmachung des Hinweises auf die Patenterteilung: **23.01.2002**
(21) Anmeldenummer: 99948683.0
(22) Anmeldetag: 21.07.1999
(51) Int. Cl.: B23Q 1/00

(54) **FLÄCHENPORTALSYSTEM MIT LINEAREN DIREKTANTRIEBEN**
SURFACE-AREA GANTRY SYSTEM WITH LINEAR DIRECT DRIVES
SYSTEME DE PORTIQUE EN NAPPE A COMMANDES DIRECTES LINEAIRES

(30) Priorität: 23.07.1998 DE 19833125
(43) Veröffentlichungstag der Anmeldung: 16.05.2001
(73) Patentinhaber: Actech GmbH, 09599 Freiberg (DE)
(72) Erfinder: HAUSCHILD, Rüdiger, D-09600 Naundorf (DE)
(74) Vertreter: Borchard, Wolfgang
(86) Internationale Anmeldenummer: DE9902281
(87) Internationale Veröffentlichungsnummer: WO0005028

(56) Entgegenhaltungen:
- EP-A- 0 614 724
- DE-A- 4 106 620
- DE-U- 29 705 152
- PATENT ABSTRACTS OF JAPAN vol. 10, no. 333 (M-534) [2389], 12. November 1986 (1986-11-12) & JP 61 136753 A (OMRON TATEISI ELECTRONICS CO), 24. Juni 1986 (1986-06-24)

## Beschreibung

Die Erfindung betrifft ein Flächenportalsystem mit linearen Direktantrieben (Linearmotoren) für Bearbeitungs- Montage- und Handhabungsaufgaben mit 3 Bewegungsachsen in X-, Y- und Z- Richtung, das auf einer Stützkonstruktion oder am Maschinengestell befestigt ist, wobei die Z- Achse mit Bearbeitungs- oder Greifmechanismen, insbesondere für die Hochgeschwindigkeitsbearbeitung von nichtmetallischen Werkstoffen, versehen ist.

Die Bezeichnung Flächenportalsystem wurde deshalb gewählt, da in der Fachliteratur die Bezeichnung Flächenportalroboter auftaucht, dessen Achsanordnung vergleichbar ist. Maschinenkonzepte dieser Art werden in anderen Quellen auch als Kreuztischkonstruktion bezeichnet.

Das Flächenportalsystem hat 3 Bewegungsachsen in X-, Y-, und Z- Richtung und ist an einer Stützkonstruktion oder an einem Maschinengestell befestigt. An der Z- Achse sind je nach Aufgabenstellung verschiedenste Bearbeitungs- oder Greifmechanismen mit oder ohne Drehund Schwenkachse montierbar (z. B. Hauptspindelantriebe, Schneidlaser, Punktschweißzangen, Schweiß-, Löt-, Klebe-, Beschichtungs-, Schleif-, Schraub-, Nietgeräte usw. bis hin zu Montage- und Handhabungsgreifern in beliebiger Ausführung).

Insbesondere für die HSC- Bearbeitung ist es wichtig, eine hohe Steifigkeit der Gestell- und Führungsbaugruppen zu erreichen und gleichzeitig die bewegten Massen zu minimieren. Bei Mehrachssystemen ist es oft so, daß der Einsatz serienmäßiger Komponenten und Module nicht zum gewünschten Erfolg führt. Hohe Beschleunigungswerte der Maschine bei gleichzeitig hoher Steifigkeit müssen dann teuer erkauft werden und sind mit einer Reihe von Kompromissen verbunden.

Nach dem Stand der Technik ist zum Beispiel aus der DE Patentschrift 43 15 762 ein zweidimensionales Antriebssystem mit über Kreuz angeordneten Führungsstangen oder aus der DE 38 19 278 eine Doppellinearführung mit getrennten Führungs - und Antriebswellen bekannt, die seitlich in Lagerböcken gelagert sind. Die Belastbarkeit der Spindeln und deren Baulänge ist jedoch beschränkt.

Portalsysteme für verfahrbare Schlitten können außerdem gemäß der DE Offenlegungsschrift 41 06 620 aus Trägerprofilen bestehen, die als Strangpreßprofile aus Aluminium hergestellt sind. Das Trägerprofil, das sich durch ein besonders geringes Gewicht je Längeneinheit auszeichnen soll, muß mit einem möglichst großen Widerstandsmoment gegen Biegung und demgemäß mit einem vergleichsweise großen Querschnitt sowie mit einem gehärteten Profilstab gegen den zu erwartenden Verschleiß ausgestattet werden. Der Profilstab hat auf das Widerstandsmoment keinen positiven Einfluß. Infolgedessen können die Abmessungen nicht sehr klein gehalten und die Schwingungen nicht wesentlich reduziert werden.

Die EP A 0614 724 beschreibt eine Werkzeugmaschine, der Präambel des Anspruchs 1 entsprechend, bei welcher der Antrieb zwei parallel angeordnete elektrische Linearmotoren umfaßt, wobei sich der Schlitten zwischen den beiden Linearmotoren erstreckt. Mittels einer Steuerung werden die Linearmotoren zum Verfahren des Schlittens gleichzeitig betrieben. Durch die Verwendung zweier gleichzeitig betriebener Linearmotoren sollen in einfacher Weise besonders hohe Beschleunigungskräfte für eine hochdynamische Bewegung des Schlittens geliefert werden. Der Schlitten ist auf dem Längsbett des Maschinengestells geführt.

Die Aufgabe der Erfindung besteht in einem Flächenportalsystem mit einem einfacherem Aufbau und mit möglichst gering zu bewegenden Massen bei einer hohen Steifigkeit.

Erfindungsgemäß wird die Aufgabe bei einem Flächenportalsystem dadurch gelöst, daß die X-, Y- und Z- Achsen mit synchronen Linearmotoren angetriebene Linearmodule aufweisen. Die Module werden untergliedert in Trägerprofile, Schlitten bzw. Arbeitsschlitten.

Die Trägerprofile sind warmgewalzt und haben einen rechteckigen oder quadratischen Querschnitt. Sie sind mit paarweise gegenüberliegenden Sekundärelementen bestückt. Der Schlitten bzw. Arbeitsschlitten ist aus Metallguß in Form eines Integralbauteils mit Umgriffen für die X-, Y- und Z- Achse ausgebildet und enthält die Primärelemente.

Die Vorteile der Erfindung liegen in einem besonders leichten, steifen, einfachen und kompakten Flächenportalsystem, das auch in kleinen Stückzahlen für große Bearbeitungsräume kostengünstig hergestellt werden kann. Bei der Fertigung von Linearmodulen in Integralbauweise kommt lediglich ein einheitliches Konstruktionsprinzip zum Einsatz. Bei der Dimensionierung der Module kann auf einheitliche Berechnungsmodelle zurückgegriffen werden. Aus den Ergebnissen der Berechnung können über eine Variantenkonstruktion die Fertigungszeichnungen für die Module abgeleitet werden. Somit ist eine beanspruchungsgerechte Auslegung des Flächenportalsystems für beliebige Anwendungsfälle möglich. Die Verwendung von gleichen und ähnlichen Teilen in den Modulen vereinfacht die Konstruktion und senkt die Kosten. Das Konstruktionsprinzip nutzt die Vorteile von Guß - und Schweiß - und Verbundkonstruktionen. Die Verbindung von Gußund Schweißteilen ermöglicht relativ wenig Einzelteile und Montagebaugruppen sowie eine vergleichsweise verzugfreie Konstruktion des Portalsystems mit guter Maßhaltigkeit. Der Aufbau des Flächenportalsystems ist symmetrisch gestaltet, wodurch Kippfehler nahezu ausgeschlossen werden. Die besonders leichte und steife Auslegung der bewegten Maschinenteile hat ein geringeres Maschinengewicht zum Ergebnis, was die Aufstellung der Maschine vereinfacht und die damit verbundenen Kosten senkt. Die Minimierung der bewegten Massen bringt noch weitere Effekte, wie eine bessere Dynamik der Maschine, relativ hohe Achs- Beschleunigungen und Geschwindigkeiten bei geringeren Beschleunigungskräften, sowie geringeren Energiebedarf während des Betriebs der Maschine. Die sehr hohen Anziehungskräfte zwischen den Primär- und Sekundärteilen der synchron arbeitenden Linearmotoren werden durch die gegenüberliegende Anordnung der Motoren kompensiert. Dadurch wird die Belastung der Linearführungen reduziert und deren Lebensdauer erhöht. Insgesamt können kleinere, leichtere und kostengünstigere Baureihen eingesetzt werden. Des weiteren sind Linearmotoren, Linearführung sowie das Längenmeßsystem unter einem gemeinsamen Faltenbalg vor Verschmutzung geschützt. Bei der Bearbeitung nichtmetallischer Werkstoffe ist die Abschirmung der Linearmotoren durch einen Faltenbalg nicht unbedingt notwendig, wenn die Linearmotore eine vertikale Einbaulage haben. Hierbei besteht ein Luftspalt zwischen dem Primär - und Sekundärteil in Richtung der Schwerkraft. Ablagerungen aus Materialabtrag können nicht entstehen. Es sind gegebenenfalls Staubabstreifer erforderlich, insbesondere bei sich elektrostatisch aufladenden Stäuben. Die Funktion der verschleißfrei arbeitenden Linearmotoren bleibt dadurch zu jedem Zeitpunkt gegeben. Dies sichert eine hohe Systemzuverlässigkeit. Im Gegensatz zu konventionellen Spindelantrieben arbeiten Linearmotoren verschleißfrei.

Ein weiterer Vorteil kann dadurch erzielt werden, daß die Schlitten bzw. der Arbeitsschlitten als stark verrippte dünnwandige Metallgußteile mit geringer Masse und hoher Steifigkeit über verlorene Formen durch Verwendung einer Prototypmodelleinrichtung, durch Direktes Lasersintern von Croning ® - Sand oder durch direktes Formstoff - Fräsen auf der Basis der CAD - Daten schnell und wirtschaftlich in kleinen Stückzahlen ab Losgröße 1 herstellbar sind.

Alle bewegten Linear- Achsen des Maschinengestells weisen ein Trägerprofil aus einem handelsüblichen warmgewalzten Profilrohr mit rechteckigem Querschnitt auf. Die Trägerprofile sind als einfache Schweißkonstruktion ausgeführt. An den Stirnseiten sind Verbindungsflansche angeschweißt, während an der noch freien Längsseite des Trägerprofils Abstützungen befestigt werden können. Das Trägerprofil ist so gestaltet, daß Schweißverzug minimiert wird.

Nach einer weiteren Ausgestaltung der Erfindung ist vorgesehen, daß die Biege - und Verwindungssteifigkeit der Trägerprofile durch vollständiges oder teilweises Ausschäumen mit schäumbaren Aluminiumwerkstoff oder eines anderen geeigneten schäumbaren Metalls erhöht wird. Eine weitere Erhöhung der Biege- und Verwindungssteifigkeit wird durch eine Anordnung von Stegblechen erreicht, wobei die äußere Kontur der Stegbleche nach der inneren Kontur des Trägerprofils bemessen ist. Stegbleche gibt es in flacher und gekröpfter Ausführung. Eine Kombination beider Ausführungen ist möglich. Durch die Verwendung gekröpfter Stegbleche in geneigter Anordnung werden besonders steife Strukturen erzielt. Stegbleche sind mit Durchbrüchen ausführbar. Die Stegbleche werden auf einem oder mehreren parallelen Stäben, Profilen, Rohren oder Profilrohren angeordnet und auf diesen durch Schweißen fixiert. Die Länge der Anordnung entspricht dabei der Länge des zu versteifenden Trägerprofils. Abstände, Anzahl und Anordnung der Stegbleche richten sich nach der jeweiligen Beanspruchung des Trägerprofils. Die Anordnung wird in das Trägerprofil eingelegt, wobei in die Hohlräume zwischen den Stegblechen eine definierte Menge eines schäumbaren Aluminiumwerkstoffs oder anderen geeigneten schäumbaren Metalls in Form von Sinterpreßlingen gegeben wird. Schäumbare Sinterpreßlinge werden z. B. aus dem Pulver einer Aluminiumlegierung und einem Treibmittel hergestellt. Zum Einsatz kommen bereits bekannte Schäumwerkstoffe. Darüber hinaus kann ein Flußmittel zur Anwendung kommen. welches bereits im Sinterpreßling integriert ist oder vor dem Ausschäumen in den Hohlraum gesprüht wird, um das Kriech- und Kontaktverhalten des Metallschaums zu verbessern. Die Anordnung von Stegblechen setzt ein volles Ausschäumen des Trägerprofils voraus. Das Ausschäumen von Trägerprofilen erfordert einen relativ großen Glühofen oder den Einsatz von Induktionsspulen. Es sind Entlüftungsbohrungen im Profil vorzusehen. Das Trägerprofil wird auf Schäumtemperatur gebracht. Im Spalt zwischen der Umrißfläche eines Stegblechs und den Innenflächen des Trägerprofils kriecht aufgrund von Kapillarwirkung oder aufgrund der Zugabe von Flußmittel das flüssige Metall. Im Spalt selbst kann das geschäumte Metall keine Schaumstrukturen bilden, so daß die Stegbleche ähnlich dem Löten nach Abkühlung in ihrer Lage fixiert werden. Der Metallschaum hat lediglich die Funktion, flüssiges Metall in jeden Spalt zu transportieren und die Stegbleche so einzuspannen, daß ein Beulen oder Verwölben der Stegbleche verhindert wird. Die Druckfestigkeit der Verbindung zwischen Umrißfläche Stegblech und Innenfläche Trägerprofil ist höher als die des geschäumten Materials. Die Stegbleche sind somit in der Lage, die Wandung des Trägerprofils gegenüber Verformung abzustützen und bilden eine wirkungsvolle Verrippung.

Nach einer weiteren Ausgestaltung der Erfindung ist vorgesehen, daß die Biege - und Verwindungssteifigkeit der Trägerprofile erhöht wird durch eine Anordnung von Stegkassetten, die aus zwei oder mehreren flachen oder gekröpften Stegblechen (ohne Durchbrüche) und Distanzelementen bzw. aus Blechformteilen bestehen, wobei die äußere Kontur der Bleche nach der inneren Kontur des Trägerprofils bemessen ist und alle Einzelteile der Stegkassetten durch Schweißen miteinander verbunden sind. Stegkassetten gibt es in flacher oder gekröpfter Ausführung. Eine Kombination beider Ausführungen ist möglich. Die Stegkassetten werden auf einem oder mehreren parallelen Stäben, Profilen, Rohren oder Profilrohren angeordnet und durch Schweißen fixiert. Die Länge der Anordnung entspricht dabei der Länge des zu versteifenden Trägerprofils. Die Anordnung wird in das Trägerprofil eingelegt, wobei in die Hohlräume der Stegkassetten eine definierte Menge eines schäumbaren Aluminiumwerkstoffs oder anderen geeigneten schäumbaren Metalls in Form von Sinterpreßlingen gegeben wird. Bei der Anordnung von Stegkassetten wird das Trägerprofil teilweise ausgeschäumt. Der Metallschaum hat die Funktion, flüssiges Metall in jeden Spalt zwischen den Umrißflächen der Stegkassette und den Innenflächen des Trägerprofils zu transportieren und zusammen mit den Blechen der Stegkassette, die als Schalung füngieren, eine Rippe zu bilden. Das Ausschäumen der Hohlräume von Stegkassetten in Trägerprofilen erfolgt in Analogie zur Variante mit Stegblechen. Werden Rohre oder Profilrohre in das Trägerprofil integriert, kann der vom Rohrprofil gebildete Hohlraum als Durchführung für Energieleitungen genutzt werden.

Nach einer weiteren Ausgestaltung der Erfindung ist vorgesehen, daß die Biege - und Verwindungssteifigkeit der Trägerprofile erhöht wird durch Fixieren eines Fachwerkträgers im Trägerprofil, welcher durch eine Anordnung von Stegblechen bzw. Stegkassetten mit der Wandung des Trägerprofils verbunden ist. Die Stegbleche bzw. Stegkassetten werden auf den Längsprofilen des Fachwerkträgers, bevorzugt an den Knotenpunkten des Fachwerks, durch Schweißen fixiert. Der Fachwerkträger kann aus Stäben, Profilen, Rohren oder Profilrohren aufgebaut sein und ist eine Schweißkonstruktion, die allein schon tragende Eigenschaften besitzt. Die Länge der Anordnung entspricht dabei der Länge des zu versteifenden Trägerprofils. Die Rohrenden werden verschlossen, so daß die Hohlräume in den Rohren erhalten bleiben. Die Anordnung wird in das Trägerprofil eingelegt, wobei in die Hohlräume zwischen den Stegblechen bzw. in die Hohlräume der Stegkassetten eine definierte Menge eines schäumbaren Aluminiumwerkstoffs oder anderen geeigneten schäumbaren Metalls in Form von Sinterpreßlingen eingelegt wird. Für die Stegbleche und Stegkassetten wirken dieselben Zusammenhänge wie oben beschrieben. Die Bleche sind somit in der Lage, die Wandung des Trägerprofils gegenüber Verformung abzustützen und Kräfte auf den innenliegenden Fachwerkträger zu übertragen.

Vorzugsweise kommt ein schäumbarer Aluminiumwerkstoff zum Einsatz. Hierzu wird aus einem Gemisch aus Aluminiumpulver oder Metallpulver mit einem Treibmittel, wie Titanhydrid, bei einer Temperatur unterhalb des Schmelzpunktes durch Sintern oder Pressen ein Halbzeug hergestellt, welches das noch unzersetzte Treibmittel enthält.

Die Erfindung soll nachstehend an einem Ausführungsbeispiel und anhand von Zeichnungen näher erläutert werden. In den dazugehörigen Zeichnungen zeigt
Figur 1 ein Flächenportalsystem mit einem einfach geführten Arbeitsschlitten,
Figur 2 ein Flächenportalsystem mit einem zweifach geführten Arbeitsschlitten und in
Figur 3 bis Figur 12 werden verschiedene Ausführungsformen von Trägerprofilen für Flächenportalsysteme gezeigt, deren Aussteifung durch eine in oder mit

Aluminiumschaum oder einem anderen geeigneten Metallschaum fixierten Anordnung von Stegblechen oder Stegkassetten hergestellt wird. Die kleine Auswahl von Ausführungsformen soll andeuten, welche Möglichkeiten es gibt, Stegbleche oder Stegkassetten auf Stäben, Profilen, Rohren, Profilrohren sowie Fachwerkträgern anzuordnen und diese Anordnung mittels eines geeigneten Metallschaums im Trägerprofil zu fixieren. Es wird kein Anspruch auf Vollständigkeit erhoben.

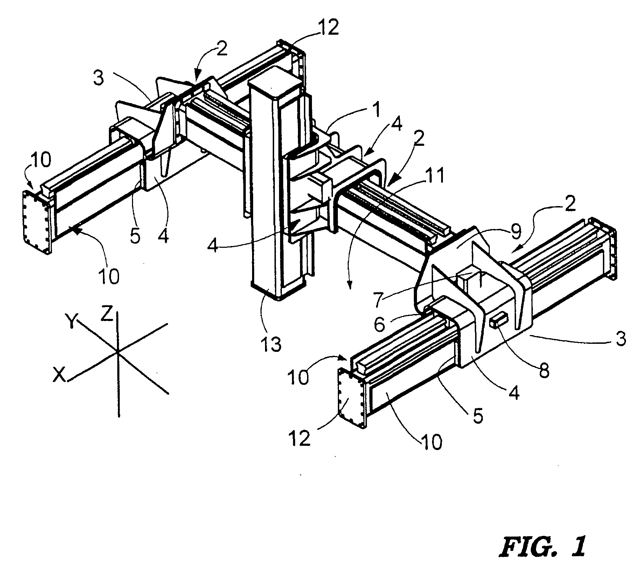

Figur 1 zeigt ein Flächenportalsystem mit einem einfach geführten Arbeitsschlitten 1, welches in X-Richtung zwei ortsfeste Linearmodule 2 aufweist, die im entsprechenden Abstand zueinander, beidseitig und parallel zum Arbeitsraum 11 angeordnet sind. Die Linearmodule 2 werden in Trägerprofile 12 mit dem Schlitten 3 beziehungsweise mit dem Arbeitsschlitten 1 untergliedert. Der Arbeitsschlitten 1 und die Schlitten 3 sind stark verrippte dünnwandige Gußteile mit geringer Masse und hoher Steifigkeit. Sie haben tragende Funktion und dienen gleichzeitig als Gehäuse für mechanische Baugruppen. Die Trägerprofile 12, Arbeitsschlitten 2 und Schlitten 3 sind FEM- optimiert. Jeder Linearmodul 2 verfügt über zwei gegenüberliegend angeordnete synchrone Linearmotore. Die Sekundärteile 10 der Linearmotore sind in Form der Seltenerden - Magnete auf das Trägerprofil 12 aufgeklebt oder werden konventionell mittels Trägerschiene montiert. Die Linearmodule 2 in X- Richtung werden paarweise betrieben und sind baugleich bezüglich ihrer Leistung (Gantry- Achse). Sie bilden gemeinsam die X- Achse. Auf jedem Linearmodul 2 in X- Richtung wird jeweils ein Schlitten 3 geführt und angetrieben. Dieser verfügt über einem gabelförmigen Umgriff 4 zur Aufnahme der Primärteile 5, der Führungswagen 6, der Klemm- und Dämpfungselemente 7 sowie des Lesekopfs 8 für das Längenmeßsystem. Rechtwinklig zur X- Achse ist ein Linearmodul 2 in Y- Richtung angeordnet. Dieser ist über Anschraubflansche 9 fest mit den Schlitten 3 verbunden und überbrückt den Arbeitsraum 11. Der Linearmodul 2 in Y- Richtung trägt einen Arbeitsschlitten 1. Im Arbeitsschlitten 1 werden die Linearmodule 2 der Y- und Z-Achse rechtwinklig zueinander geführt und angetrieben. Der Arbeitsschlitten 1 verfügt über zwei gabelförmige Umgriffe 4 für beide Achsrichtungen. Der Linearmodul 2 in Z- Richtung weist an seinem dem Arbeitsraum 11 zugewandten Ende eine nicht weiter dargestellt Aufnahme 13 zur Befestigung von Bearbeitungs- oder Greifmechanismen auf.

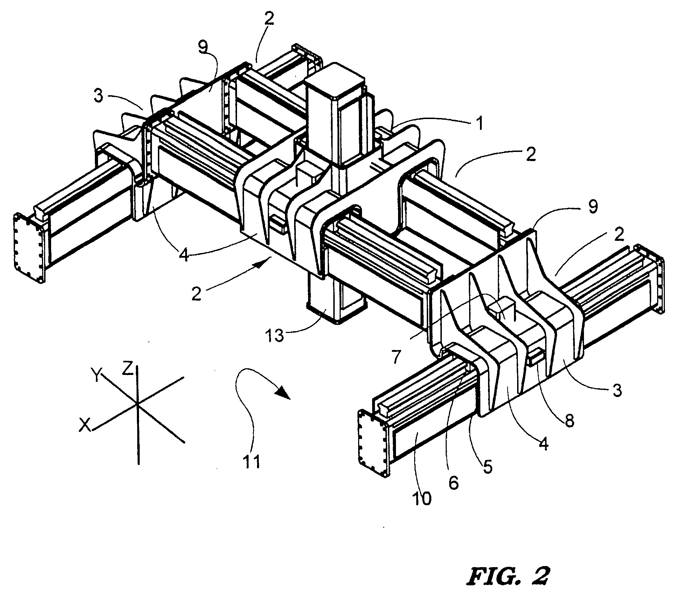

Figur 2 zeigt ein Flächenportalsystem mit einem doppeltgeführten Arbeitsschlitten 1, welches in X-Richtung zwei ortsfeste Linearmodule 2 aufweist, die im entsprechenden Abstand zueinander, beidseitig und parallel zum Arbeitsraum 11 angeordnet sind. Sie bilden gemeinsam die X- Achse. Auf jedem Linearmodul 2 in X- Richtung wird jeweils ein Schlitten 3 geführt und angetrieben. Dieser verfügt über einem gabelförmigen Umgriff 4 zur Aufnahme der Primärteile 5, der Führungswagen 6, der Klemm- und Dämpfungselemente 7 sowie des Lesekopfs 8 für das Längenmeßsystem. Rechtwinklig zur X- Achse sind zwei Linearmodule 2 in Y- Richtung angeordnet. Diese sind über Anschraubflansche 9 fest mit den Schlitten 3 verbunden und überbrücken den Arbeitsraum 11. Sie bilden gemeinsam die Y- Achse. Die Linearmodule 2 in Y- Richtung tragen einen Arbeitsschlitten 1. Im Arbeitsschlitten 1 werden die Linearmodule 2 der Y- und Z- Achse rechtwinklig zueinander geführt und angetrieben. Der Arbeitsschlitten 1 verfügt über gabelförmige bzw. geschlossene Umgriffe 4 für beide Achsrichtungen. Der Linearmodul 2 in Z- Richtung weist an seinem dem Arbeitsraum 11 zugewandten Ende eine Aufnahme 13 zur Befestigung von Bearbeitungs- oder Greifmechanismen auf. Durch den symmetrischen Aufbau des Flächenportalsystems werden Kippfehler nahezu ausgeschlossen.

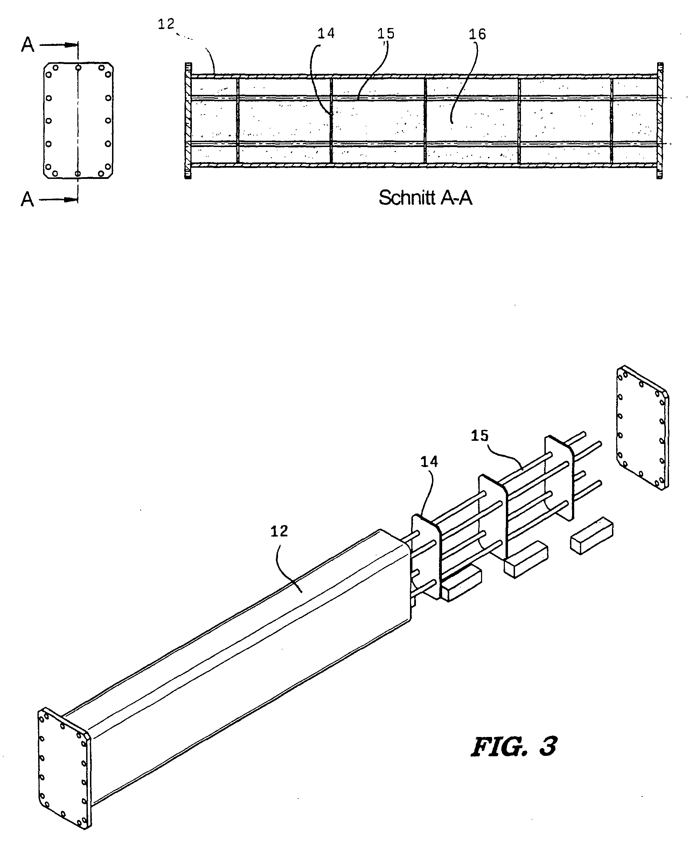

Figur 3 zeigt ein Trägerprofil 12, welches eine lineare Anordnung von flachen Stegblechen 14 enthält, die auf Rundstäben 15 durch Schweißen befestigt und durch vollständiges Ausschäumen der Hohlräume 16 zwischen den Stegblechen 14 im Trägerprofil 12 fixiert ist.

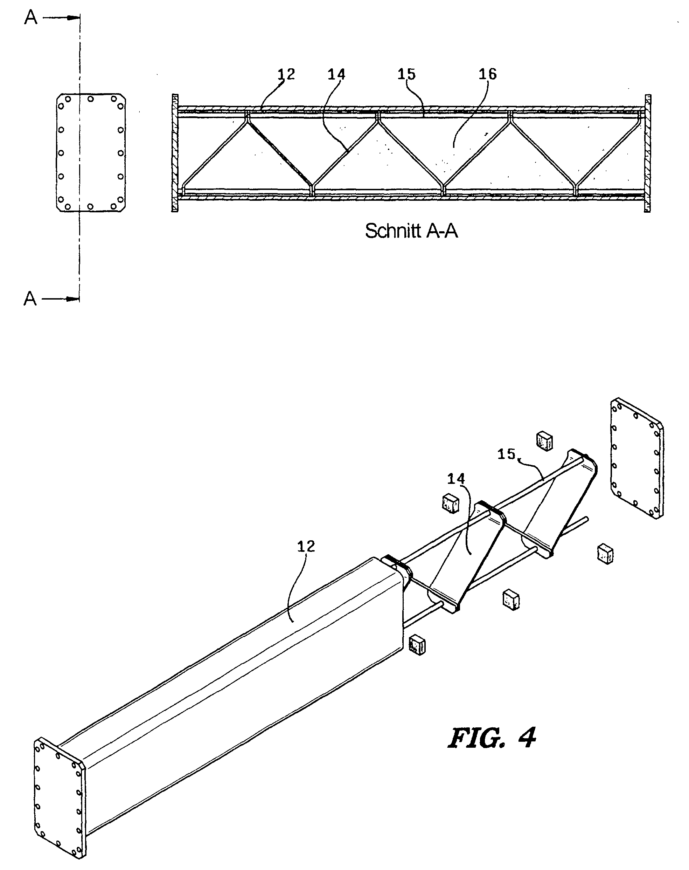

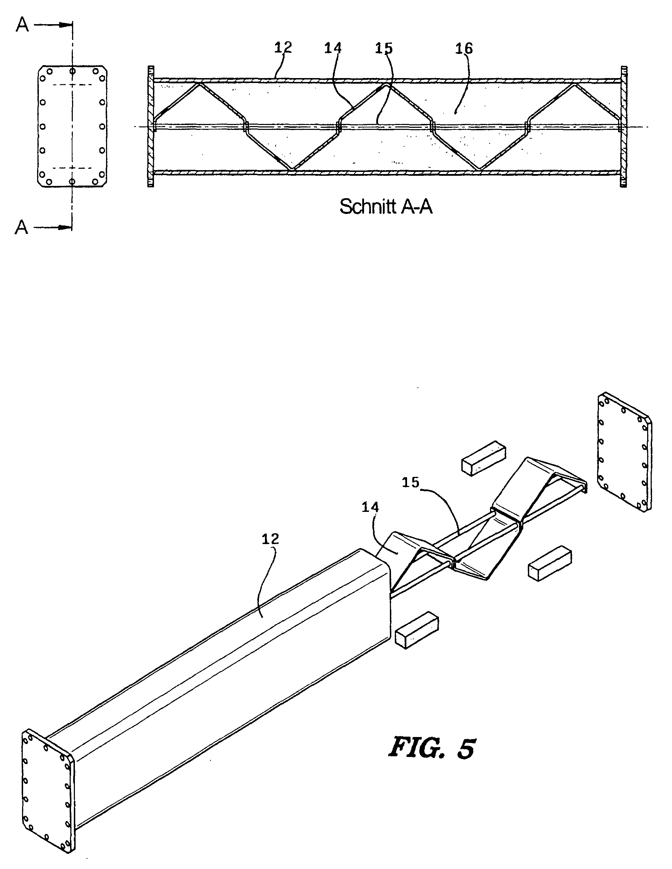

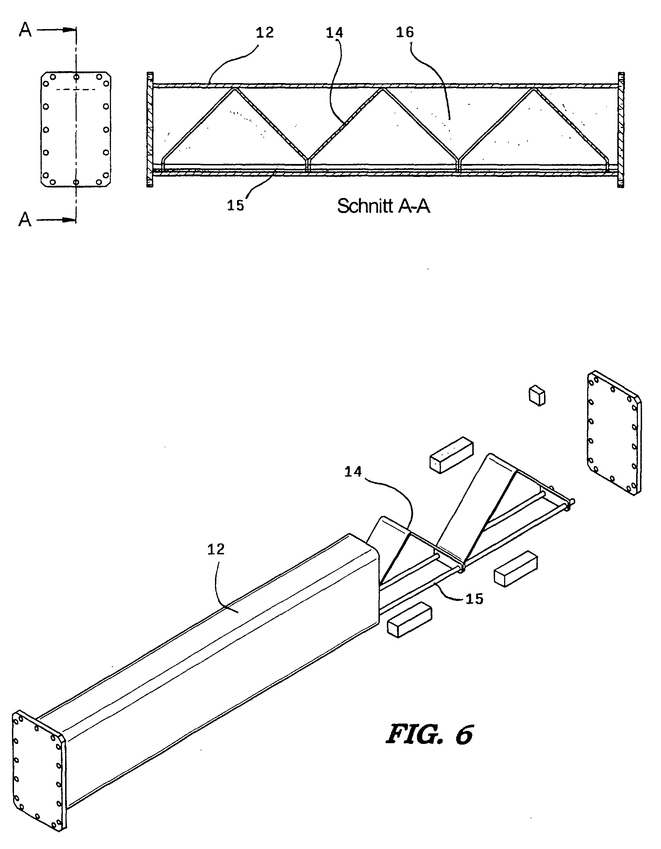

Figur 4, 5 und 6 zeigt Trägerprofile 12 mit Varianten einer linearen Anordnung von abgewinkelten bzw. gekröpften Stegblechen 14, die auf Rundstäben 15 durch Schweißen befestigt und durch vollständiges Ausschäumen der Hohlräume 16 zwischen den Stegblechen 14 im Trägerprofil 12 fixiert ist. Im Trägerprofil 12 schräg angeordnete Stegbleche 14 ergeben eine höhere Biege- und Verwindungssteifigkeit für das Trägerprofil 12, als gerade angeordnete Stegbleche 14.

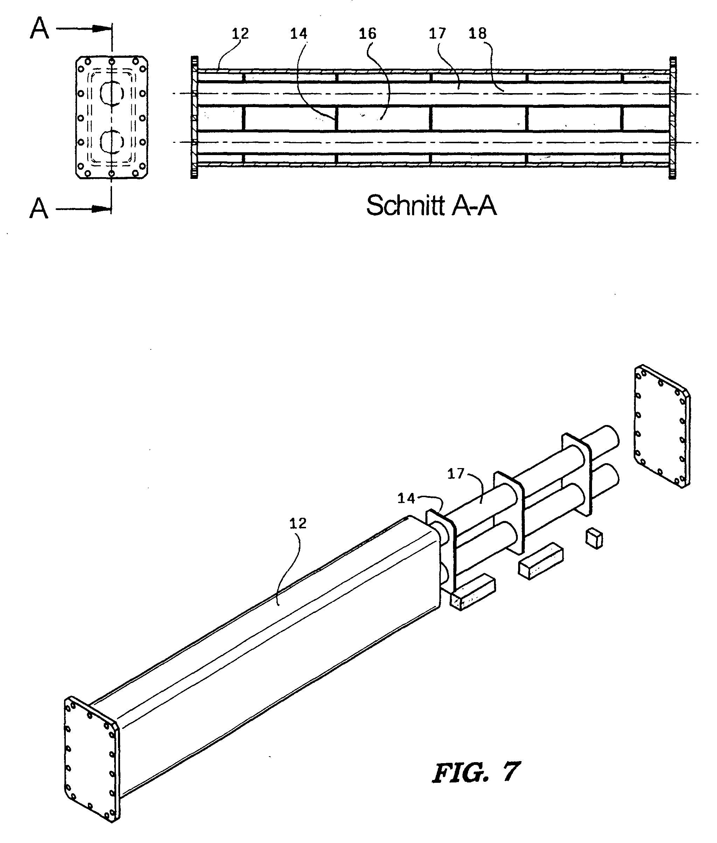

Figur 7 zeigt ein Trägerprofil 12, welches eine lineare Anordnung von flachen Stegblechen 14 enthält, die auf Rohren 17 durch Schweißen befestigt und durch vollständiges Ausschäumen der Hohlräume 16 zwischen den Stegblechen 14 im Trägerprofil 12 fixiert ist. Die Hohlräume 18 in den Rohren 17 bleiben erhalten und können als Durchführung von Energieleitungen bzw. unter bestimmten konstruktiven Voraussetzungen zur Speicherung und Weiterleitung von flüssigen oder gasförmigen Medien genutzt werden.

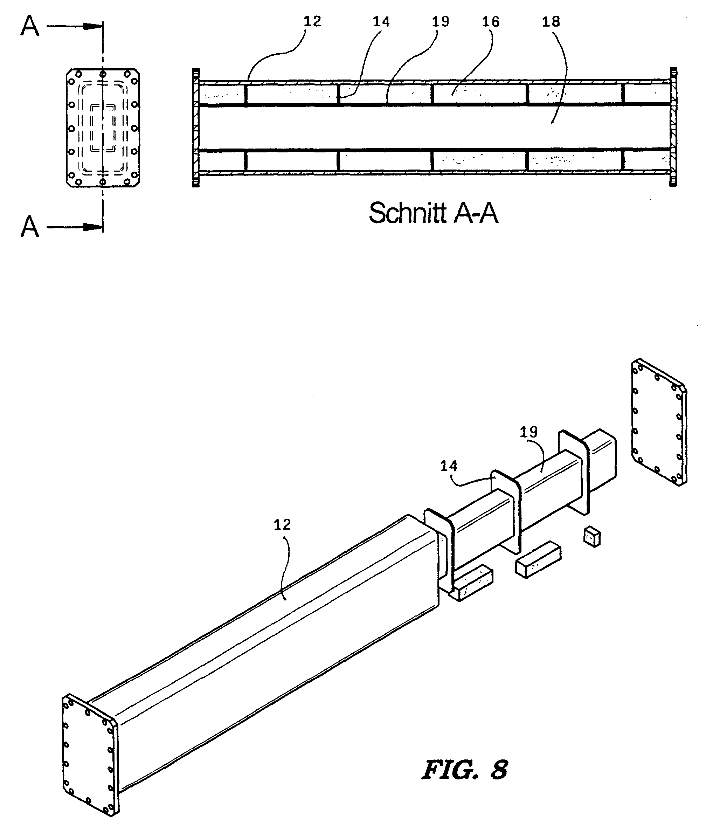

Figur 8 zeigt ein Trägerprofil 12, welches eine lineare Anordnung von flachen Stegblechen 14 enthält, die auf rechteckigen oder quadratischen Profilrohren 19 durch Schweißen befestigt und durch vollständiges Ausschäumen der Hohlräume 16 zwischen den Stegblechen 14 im Trägerprofil 12 fixiert sind. Die Hohlräume 18 im Profilrohr 19 bleiben erhalten und können als Durchführung von Energieleitungen genutzt werden.

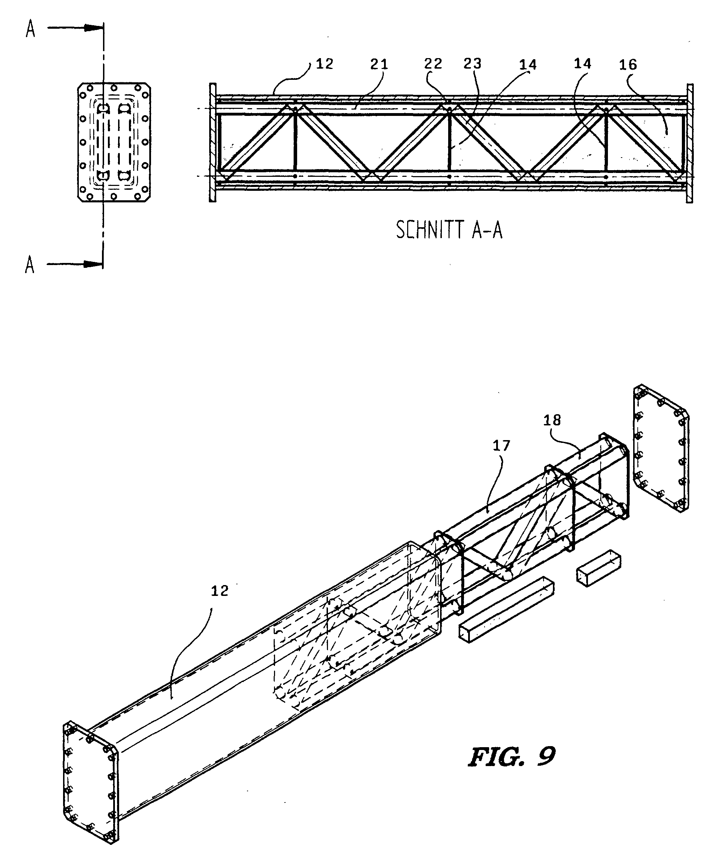

Figur 9 zeigt ein Trägerprofil 12, welches eine lineare Anordnung von flachen Stegblechen 14 enthält, die auf den Längsprofilen 12 eines Fachwerkträgers 23 bevorzugt in den Knotenpunkten 22 des Fachwerkträgers 23 durch Schweißen befestigt und durch vollständiges Ausschäumen der Hohlräume 16 zwischen den Stegblechen 14 gemeinsam mit dem Fachwerkträger 23 im Trägerprofil 12 fixiert sind. Bei Ausführung des Fachwerkträgers 23 aus Rohren 17 sind diese an den Enden geschlossen, um die Hohlräume 18 im Rohr zu erhalten.

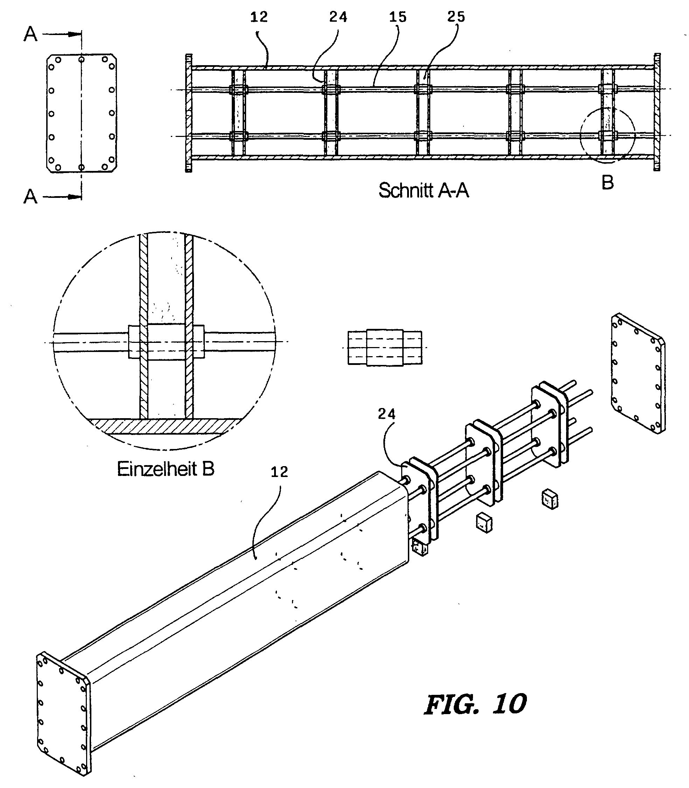

Figur 10 zeigt ein Trägerprofil 12, welches eine lineare Anordnung von flachen Stegkassetten 24 enthält, die auf Rundstäben 15 durch Schweißen befestigt und durch vollständiges Ausschäumen der Hohlräume 25 in den Stegkassetten 24 im Trägerprofil 12 fixiert sind.

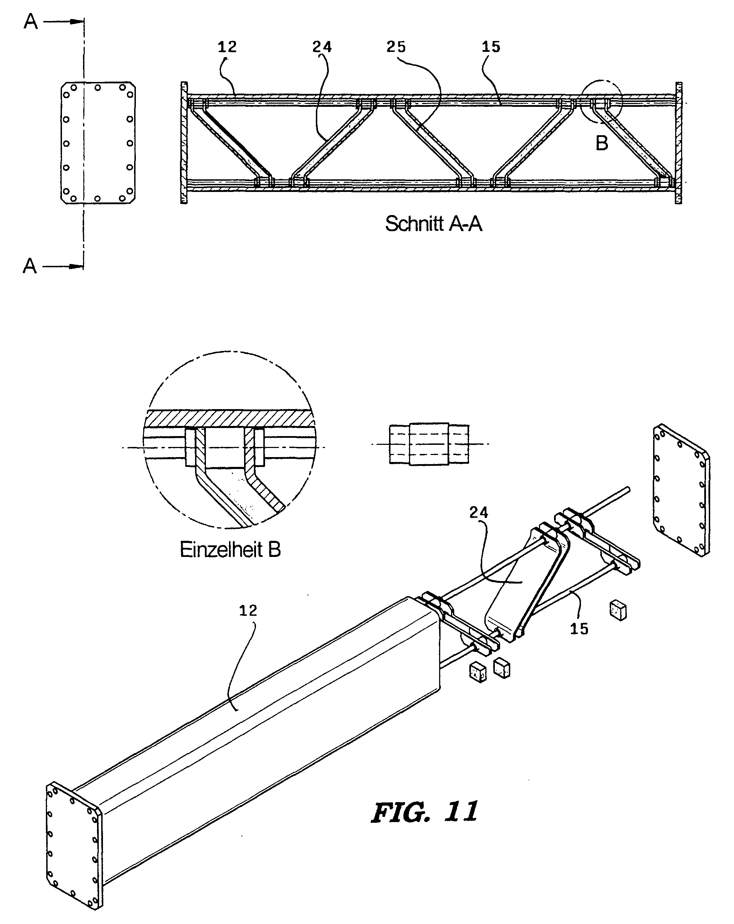

Figur 11 zeigt ein Trägerprofil 12, welches eine lineare Anordnung von gekröpften Stegkassetten 24 enthält, die auf Rundstäben 15 durch Schweißen befestigt und durch vollständiges Ausschäumen der Hohlräume 25 in den Stegkassetten 24 im Trägerprofil 12 fixiert sind. Im Trägerprofil 12 schräg angeordnete Stegkassetten 24 können eine höhere Biege- und Verwindungssteifigkeit für das Trägerprofil 12 ergeben, als gerade angeordnete Stegkassetten 24 in Figur 10.

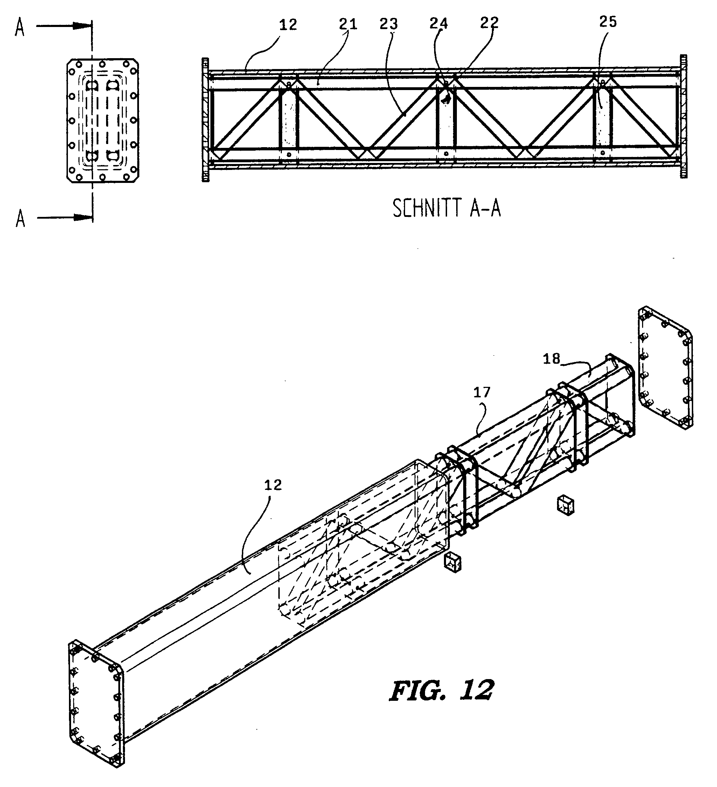

Figur 12 schließlich zeigt ein Trägerprofil 12, welches eine lineare Anordnung von flachen Stegkassetten 24 enthält, die auf den Längsprofilen 21 eines Fachwerkträgers 23 bevorzugt in den Knotenpunkten 22 des Fachwerkträgers 23 durch Schweißen befestigt und durch vollständiges Ausschäumen der Hohlräume 25 zwischen in den Stegkassetten 24 gemeinsam mit dem Fachwerkträger 23 im Trägerprofil 12 fixiert sind. Bei Ausführung des Fachwerkträgers 23 aus Rohren 17 sind diese an den Enden geschlossen, um die Hohlräume 18 in den Rohren 17 zu erhalten.
Weitere Kombinationen für die Aussteifung von Trägerprofilen 12 sind möglich. Die Figuren 3 bis 12 sind lediglich einige wenige ausgewählte Ausführungsformen.

Nach dem Ausschäumen wird das Trägerprofil 12 komplett bearbeitet. Möglichst in einer Aufspannung werden die Montageflächen plan gefräst und alle Bohrungen gefertigt. Gewindebohrungen werden vorzugsweise durch Gewindeformen in der Wandung des Trägerprofils 12 hergestellt. Maschinenschrauben sind des weiteren im Metallschaum durch Dübel, Gewindeeinsätze, Gewindebohrungen oder andere Befestigungslösungen sicher zu befestigen.

## Patentansprüche

1. Flächenportalsystem mit linearen Direktantrieben, insbesondere **synchron angetriebene Linearmotoren**, für Bearbeitungs- Montage- und Handhabungsaufgaben mit 3 Bewegungsachsen in X-, Y- und Z- Richtung, das auf einer Stützkonstruktion oder am Maschinengestell befestigt ist, wobei die Z- Achse mit Bearbeitungs- oder Greifmechanismen, insbesondere für die Hochgeschwindigkeits-bearbeitung von nichtmetallischen Werkstoffen, versehen ist, **dadurch gekennzeichnet, daß** die X-, Y- und Z- Achsen Linearmodule (2) aufweisen, die aus einem warmgewalzten Trägerprofil (12) mit rechteckigem oder quadratischem Querschnitt bestehen, welche mit paarweise gegenüberliegenden Sekundärelementen (10) bestückt sind und Schlitten (3) bzw. Arbeitsschlitten (1) aus Metallguß in Form von Integralbauteilen aufweisen, welche mit einem Umgriff (4) für die X-, Y- und Z- Achse ausgebildet sind und die Primärelemente (5) enthalten.

2. Flächenportalsystem nach Anspruch 1, **dadurch gekennzeichnet, daß** bei einem mit zwei parallel verlaufenden Trägerprofilen (12) doppeltgeführten Arbeitsschlitten (1) zwei die Trägerprofile (12) gabelförmig umfassende Umgriffe (4) vorgesehen sind.

3. Flächenportalsystem nach Anspruch 1 bis 2, **dadurch gekennzeichnet, daß** die Schlitten (3) bzw. der Arbeitsschlitten (1) als stark verrippte dünnwandige Metallgußteile ausgebildet sind, welche sich durch geringe Masse und hohe Steifigkeit auszeichnen und über verlorene Formen durch Verwendung einer Prototypmodelleinrichtung, durch Direktes Lasersintern von Croning ® - Sand oder durch direktes Formstoff - Fräsen nach CAD-Daten herstellt sind.

4. Flächenportalsystem nach Anspruch 1 bis 3, **dadurch gekennzeichnet, daß** die Seltenerdenmagnete der Sekundärelemente (10) direkt auf dem Trägerprofil (12) befestigt sind.

5. Flächenportalsystem nach Anspruch 1 bis 4, **dadurch gekennzeichnet, daß** die Biege - und Verwindungssteifigkeit der Trägerprofile (12) der X-, Y- und Z- Achse durch vollständiges oder teilweises Ausschäumen mit Metall, insbesondere Aluminium erhöht ist.

6. Flächenportalsystem nach Anspruch 1 bis 5, **dadurch gekennzeichnet, daß** das Trägerprofil (12) eine auf Rundstäben (15), Rohren (17), Längsprofilen (21) oder Profilrohren (19) fixierte Anordnung paßgenauer Stegbleche (14) in flacher und/oder gekröpfter Ausführung enthält, die quer zur Längsachse des Trägerprofils (12) angeordnet sind, wobei die Hohlräume (16) zwischen den Stegblechen (14) zur Versteifung mit einer definierten Menge eines schäumbaren Metall- oder Aluminiumwerkstoffs ausgeschäumt sind.

7. Flächenportalsystem nach Anspruch 1 bis 5, **dadurch gekennzeichnet, daß** das Trägerprofil (12) eine auf Rundstäben (15), Rohren (17), Längsprofilen (12) oder Profilrohren (19) fixierte Anordnung paßgenauer Stegkassetten (24) enthält, die von zwei Stegblechen (14) in flacher und/oder gekröpfter Ausführung bzw. von Blechformteilen gebildet und quer zur Längsachse des Trägerprofils (12) angeordnet werden und über mehrere kurze Abstandhalter unter Ausbildung von Hohlräumen (25) miteinander verbunden sind, die zur Versteifung mit einer definierten Menge eines schäumbaren Metall- oder Aluminiumwerkstoffs ausgeschäumt sind.

8. Flächenportalsystem nach Anspruch 1 bis 5, **dadurch gekennzeichnet, daß** das Trägerprofil (12) einen Fachwerkträger (23) in Schweißkonstruktion enthält, welcher aus Rundstäben (15), Profilen, Rohren (17) oder Profilrohren (19) aufgebaut ist und an dessen Längsprofilen (21), bevorzugt an den Knotenpunkten (22) paßgenaue Stegbleche (14) bzw. Stegkassetten (24) in flacher Ausführung quer zur Längsachse des Trägerprofils (12) angeordnet sind, welche das Trägerprofil (12) mit dem Fachwerkträger (23) verbinden, wobei die Hohlräume (16) zwischen den Stegblechen (14) bzw. Hohlräume (25) in den Stegkassetten (24) zur Versteifung mit einer definierten Menge eines schäumbaren Metall - oder Aluminiumwerkstoffs ausgeschäumt sind.

9. Flächenportalsystem nach Anspruch 1 bis 5, **dadurch gekennzeichnet, daß** das Trägerprofil (12) Einlegeteile aus Rohr (17) oder Profilrohr (19) enthält, die nach dem Ausschäumen des Trägerprofils (12) in dessen Längsachse Hohlräume (18) bilden, wobei das Verhältnis der Summen der Innenquerschnittsflächen der Einlegeteile zur Innenquerschnittsfläche des Trägerprofils (12) nicht größer als ½ ist und der Abstand zwischen den Einlegeteilen bzw. zwischen Einlegeteil und Innenfläche des Trägerprofils (12) ein Kleinstmaß aufweist, welches zur durchschnittlichen Seitenlänge des Trägerprofilquerschnitts im Verhältnis von 1/5 bis 1/10 steht.

## Claims

1. An area gantry system with linear direct drives, particularly synchronous linear motors, for machining, assembly and handling tasks with three axes of movement, in the X, Y and Z directions, which system is fastened on a supporting structure or to the machine frame, the Z axis being provided with machining or gripping mechanisms, particularly for highspeed machining of nonmetallic materials, **characterized in that** the X, Y and Z axes have linear modules (2) and consist of a hot-rolled girder section (12) of rectangular or square cross section, are provided with secondary elements (10) disposed oppositely in pairs, and comprise slides (3) and work slides (1) made of cast metal as integral units, which are realized with a wrap-around (4) for the X, Y and Z axes and contain the primary elements (5).

2. The area gantry system of claim 1, **characterized in that** in the case of a doubly-guided work slide (1) with two parallel girder sections (12), two wrap-arounds (4) are provided that surround the girder sections (12) in a fork-like manner.

3. The area gantry system of claims 1 to 2, **characterized in that** the slides (3) and the work slide (1) are realized as heavily ribbed, thin-walled metal castings that are distinguished by their very low weight and high rigidity and are fabricated via lost molds by the use of a prototype pattern set, by direct laser-sintering of Croning® sand, or by direct milling of mold material based on CAD data.

4. The area gantry system of claims 1 to 3, **characterized in that** the rare-earth magnets of the secondary elements (10) are fastened directly on the girder section (12).

5. The area gantry system of claims 1 to 4, **characterized in that** the bending rigidity and torsional rigidity of the girder sections (12) of the x, y and z axes is increased by complete or partial filling with foamed metal, especially aluminum.

6. The area gantry system of claims 1 to 5, **characterized in that** the girder section (12) contains an arrangement, secured on rods (15), pipes (17), stringers (21) or special-profile pipes (19), of precisely fitted web plates (14) of planar and/or offset design, disposed transversely to the longitudinal axis of the girder section (12), the voids (16) between the web plates (14) being filled, for purposes of reinforcement, with a set quantity of a foamable metallic or aluminum material.

7. The area gantry system of claims 1 to 5, **characterized in that** the girder section (12) contains an arrangement, secured on rods (15), pipes (17), stringers (12) or special-section pipes (19), of precisely fitted web boxes (24) formed of two web plates (14) of planar and/or offset design or of shaped sheet-metal parts and disposed transversely to the longitudinal axis of the girder section (12) and connected to one another via plural short spacers, thereby forming voids (25) which are filled, for purposes of reinforcement, with a set quantity of a foamable metallic or aluminum material.

8. The area gantry system of claims 1 to 5, **characterized in that** the girder section (12) contains a truss (23) of welded construction and composed of rods (15), profile sections, pipes (17) or special-profile pipes (19) and on whose stringers (21) are disposed, transversely to the longitudinal axis of the girder section (12), preferably at the joints (22), precisely fitted web plates (14) or web boxes (24) of planar design that connect the girder section (12) to the truss (23), the voids (16) between the web plates (14) or the voids (25) in the web boxes (24) being filled, for purposes of reinforcement, with a set quantity of a foamable metallic or aluminum material.

9. The area gantry system of claims 1 to 5, **characterized in that** the girder section (12) contains inserts of pipe (17) or special-section pipe (19) that form voids (18) in the longitudinal axis of the girder section (12) after it has been filled with foam, the ratio of the sums of the inner cross-sectional areas of the inserts to the inner cross-sectional area of the girder section (12) being no more than 1/2 and the distance between the inserts and between an insert and the inner surface of the girder section (12) having a lower size limit which is 1/5 to 1/10 the average length of the sides of the cross section of the girder section.

## Revendications

1. Système de portique en nappe à entraînements directs linéaires, en particulier à moteurs linéaires à entraînement synchrone, pour travaux d'usinage, de montage et de manipulation avec 3 axes de mouvement dans le sens des X, des Y et des Z, fixé sur une construction support ou au châssis de la machine, l'axe Z étant muni de mécanismes d'usinage ou de préhension, notamment pour l'usinage à grande vitesse de matériaux non métalliques **caractérisé en ce que** l'axe des X, des Y et des Z comportent des modules linéaires (2) qui consistent en un profilé support (12) laminé à chaud de section transversale rectangulaire ou carrée, muni d'éléments secondaires (10) opposés disposés par paire et qui comportent des chariots (3) ou des chariots de travail (1) en fonte coulée sous forme d'éléments intégraux qui sont munis d'un élément de serrage (4) pour l'axe des X, des Y et des Z et qui contiennent les éléments primaires (5).

2. Système de portique en nappe selon la revendication 1, **caractérisé en ce que** sur un chariot de travail (1) à double guidage avec deux profilés (12) passant parallèlement sont prévus deux éléments de serrage (4) enveloppant en forme de fourche les profilés support (12).

3. Système de portique en nappe selon les revendications 1 à 2, **caractérisé en ce que** les chariots (3) ou les chariots de travail (1) sont formés en éléments en fonte coulée à paroi fine et fortement nervurés qui se distinguent par une faible masse et une rigidité élevée et qui sont fabriqués par l'intermédiaire de moules perdus par l'utilisation d'un dispositif de modèle prototype, par frittage laser interne direct de sable Croning ® ou par fraisage de matière à mouler selon des données DAO.

4. Système de portique en nappe selon les revendications 1 à 3, **caractérisé en ce que** les aimants de terres rares des éléments secondaires (10) sont fixés directement sur le profilé support (12).

5. Système de portique en nappe selon les revendications 1 à 4, **caractérisé en ce que** la rigidité flexionnelle et la rigidité à la torsion des profilés support (12) de l'axe des X, des Y et des Z sont augmentées par un moussage complet ou partiel avec du métal, notamment de l'aluminium.

6. Système de portique en nappe selon les revendications 1 à 5, **caractérisé en ce que** le profilé support (12) comprend une disposition de tôles d'âme (14) à ajustage précis fixée sur des barres rondes (15), des tubes (17), des profilés longitudinaux (21) ou des tubes profilés (19) en exécution plate et/ou coudée disposées transversalement par rapport à l'axe longitudinal du profilé support (12), les espaces creux (16) entre les tôles d'âme (14) étant moussés d'une quantité définie d'un matériau métallique ou d'aluminium moussant pour la rigidité.

7. Système de portique en nappe selon les revendications 1 à 5, **caractérisé en ce que** le profilé support (12) comprend une disposition de cassettes d'âme (24) à ajustage précis fixée sur des barres rondes (15), des tubes (17), des profilés longitudinaux (12) ou des tubes profilés (19) qui est formée par deux tôles d'âme (14) en exécution plate et/ou coudée ou par des éléments de tôle formées, disposées transversalement par rapport à l'axe longitudinal du profilé support (12) et reliées par plusieurs écarteurs courts en formant des espaces creux (25) qui sont moussés d'une quantité définie d'un matériau métallique ou d'aluminium moussant pour la rigidité.

8. Système de portique en nappe selon les revendications 1 à 5, **caractérisé en ce que** le profilé support (12) comprend une poutre en treillis (23) en construction soudée structurée à partir de barres rondes (15), de profilés, de tubes (17) ou de tubes profilés (19) et aux profilés longitudinaux duquel (21) sont disposées, de préférence aux points de jonction (22), des tôles d'âme (14) ou des cassettes d'âme (24) à ajustage précis en exécution plate, transversalement par rapport à l'axe longitudinal du profilé support (12) reliant le profilé support (12) à la poutre en treillis (23), les espaces creux (16) entre les tôles d'âme (14) ou les espaces creux (25) dans les cassettes d'âme (24) étant remplis de mousse d'une quantité définie d'un matériau métallique ou d'aluminium moussant pour la rigidité.

9. Système de portique en nappe selon les revendications 1 à 5, **caractérisé en ce que** le profilé support (12) comprend des inserts de tube (17) ou de tube profilé (19) qui, après moussage du profilé support (12) forment des espaces creux (18) dans son axe longitudinal, le rapport des sommes des surfaces de section intérieure des inserts par rapport à la surface de section intérieure du profilé support (12) n'étant pas supérieur à 1/2 et la distance entre les inserts ou entre l'insert et la surface intérieure du profilé support présentant une cote minimale qui est d'un rapport de 1/5 à 1/10 par rapport à la longueur latérale moyenne de la section du profilé support.
